# EUROPEAN PATENT APPLICATION

(11) **EP 4 708 960 A1**
(43) Date of publication of application: **11.03.2026**
(21) Application number: 24814073.3
(22) Date of filing: 29.04.2024
(51) Int. Cl.: H04W 36/00

(54) **COMMUNICATION METHOD AND CORRESPONDING DEVICE**

(30) Priority: 30.05.2023 CN 202310627654
(71) Applicant: Huawei Technologies Co., Ltd., Shenzhen, Guangdong 518129 (CN)
(72) Inventor: QIAO, Yunfei, Shenzhen, Guangdong 518129 (CN)
(74) Representative: Pfenning, Meinig & Partner mbB
(86) International application number: PCT/CN2024/090514
(87) International publication number: WO 2024/244867

(57) **Abstract**

This application discloses a communication method, and is applicable to satellite communication or high-altitude platform communication. The method includes: An access network apparatus sends a first request to a target network apparatus; the target network apparatus sends a first response to the access network apparatus after configuring a context parameter of a first communication interface for communication with the access network apparatus; and the access network apparatus sets up the first communication interface with the target network apparatus based on the first response, and switches a corresponding communication interface from a second communication interface with a source network apparatus to the first communication interface. In the technical solutions of this application, before a communication link with the source network apparatus deteriorates, the access network apparatus may set up the communication interface with the target network apparatus in advance, and switch to the communication interface with the target network apparatus, so that communication continuity and reliability are improved.

## Description

This application claims priority to Chinese Patent Application No. 202310627654.6, filed with the China National Intellectual Property Administration on May 30, 2023 and entitled "COMMUNICATION METHOD AND CORRESPONDING APPARATUS", which is incorporated herein by reference in its entirety.

### TECHNICAL FIELD

This application relates to the field of communication technologies, and specifically, to a communication method and a corresponding apparatus.

### BACKGROUND

High-altitude mobile communication (for example, satellite communication) is featured in a long communication distance, a large coverage area, flexible networking, and the like, and can provide services for both fixed terminals and various mobile terminals.

Because a conventional terrestrial network cannot provide seamless coverage for terminals, especially in places in which base stations cannot be deployed, for example, oceans, deserts, or the air, a non-terrestrial network (non-terrestrial network, NTN) is introduced into a 5th generation (5th generation, 5G) mobile network system. The NTN provides seamless coverage for the terminals by deploying base stations or some functions of the base stations on high-altitude platforms or satellites. In addition, the high-altitude platforms or the satellites are less affected by natural disasters, so that reliability of the 5G system can be improved.

In the terrestrial network, interfaces between a base station and a core network element or interfaces between base stations are connected through optical fiber links, and a topology is stable. However, in a high-altitude mobile communication scenario, operations such as interface setup, release, and change frequently occur on the interfaces due to movement of the high-altitude platforms or satellites, leading to deterioration in communication continuity.

### SUMMARY

This application provides a communication method, to improve communication continuity and reliability. Embodiments of this application further provide a corresponding apparatus, a communication system, a computer-readable storage medium, a computer program product, and the like.

According to a first aspect of this application, a communication method is provided. The method may be performed by an access network apparatus. The access network apparatus herein may be the access network apparatus itself, or may be a processor, a module, a chip, a chip system, or the like that is in the access network apparatus and that implements the method. The method includes: The access network apparatus sends a first request to a target network apparatus, where the first request is for requesting to set up a first communication interface between the access network apparatus and the target network apparatus; the access network apparatus receives a first response from the target network apparatus, where the first response indicates that the target network apparatus has configured a context parameter of the first communication interface; the access network apparatus sets up the first communication interface with the target network apparatus based on the context parameter of the first communication interface; and the access network apparatus switches a corresponding communication interface from a second communication interface to the first communication interface, where the second communication interface is a communication interface between the access network apparatus and a source network apparatus.

In this application, the access network apparatus may be, for example, a base station, and the source network apparatus and the target network apparatus may be core network elements, or the source network apparatus and the target network apparatus may be base stations or other apparatuses that can communicate with the access network apparatus. The access network apparatus may be mounted on a satellite or a high-altitude platform, and the high-altitude platform may be an unmanned aerial vehicle, a hot air balloon, or the like. In another scenario, the access network apparatus, the source network apparatus, and the target network apparatus may be different devices in a cloud system. In the cloud system, the access network apparatus may communicate with the source network apparatus and the target apparatus in a wireless manner. In another distributed scenario, the access network apparatus may alternatively be a control apparatus in a distributed system, and the source network apparatus and the target network apparatus are distributed apparatuses in the distributed system. In the distributed system, the access network apparatus may communicate with the source network apparatus and the target apparatus in a wireless manner.

In this application, the first communication interface and the second communication interface may be next generation (next generation, NG) interfaces between a base station and a core network element, or may be Xn interfaces between base stations, or may be F1 interfaces between a control apparatus and a distributed apparatus. It is clear that the first communication interface and the second communication interface may alternatively be communication interfaces with other names. This is not limited in this application. The solutions of this application are applicable to management of communication interfaces between the access network apparatus and non-terminal devices that perform wireless communication with the access network apparatus.

In this application, the first request may be an interface resume request (for example, a resume request), and the first response may be a response to the interface resume request (for example, a resume request response to the resume request).

In this application, when the access network apparatus is in service coverage of the source network apparatus, the access network apparatus may maintain a communication connection to the source network apparatus through the second communication interface. When the access network apparatus enters or is about to enter service coverage of the target network apparatus due to movement or another reason, the access network apparatus needs to switch, from the second communication interface to the first communication interface with the target network apparatus, the communication interface for maintaining the communication connection. In this application, the "corresponding communication interface" may be understood as a communication interface between the access network apparatus and the core network element, a communication interface between the access network apparatus and another access network apparatus, or the like.

In this application, before a communication link with the source network apparatus deteriorates, the access network apparatus may set up the communication interface with the target network apparatus in advance, and switch to the communication interface with the target network apparatus, so that communication continuity and reliability are improved.

In a possible implementation, the first request includes a context identifier of the second communication interface, and the context identifier of the second communication interface is used by the target network apparatus to obtain a context parameter of the second communication interface from the source network apparatus; and the first response includes an updated parameter, and the updated parameter is a parameter that is of the first communication interface and that changes relative to that of the second communication interface.

In this possible implementation, the context identifier (context ID) of the second communication interface identifies the context parameter of the second communication interface. In this application, each communication interface has a set of context parameters. The set of context parameters may include at least one of the following parameters: a transmission configuration parameter, configuration parameters of apparatuses at two ends of the interface belongs, a user context, and a session context. Each set of context parameters has a corresponding context identifier. The access network apparatus sends the context identifier of the second communication interface to the target network apparatus, and the target network apparatus may obtain a corresponding context parameter of the second communication interface from the source network apparatus. In this way, the target network apparatus only needs to update a parameter that is different from that of the first communication interface and that is in the context parameter of the second communication interface, to determine the context parameter of the first communication interface, and then send an updated parameter to the access network apparatus. The access network apparatus also only needs to update, based on the updated parameter, the parameter that is different from that of the first communication interface and that is in the context parameter of the second communication interface, to determine the context parameter of the first communication interface. In this way, efficiency of setting up the first communication interface can be improved.

In a possible implementation, the first request includes a context identifier of the first communication interface, and the context identifier of the first communication interface is used by the target network apparatus to configure the context parameter of the first communication interface.

In this possible implementation, the access network apparatus may directly send the context identifier of the first communication interface to the target network apparatus. In this way, the target network apparatus only needs to find a previously configured context parameter of the first communication interface, so that the first communication interface can be set up. In this way, efficiency of setting up the first communication interface can be improved.

In a possible implementation, the context identifier of the first communication interface is notified by the source network apparatus to the access network apparatus.

In this possible implementation, the source network apparatus may determine the target network apparatus for the access network apparatus, and notify the access network apparatus of the context identifier of the first communication interface that is to be set up with the target network apparatus. This helps the access network apparatus quickly determine the to-be-set-up communication interface.

In a possible implementation, the context identifier of the first communication interface is determined by the access network apparatus from a plurality of to-be-set-up communication interfaces based on an interface setup trigger condition.

In this possible implementation, the access network apparatus may independently select, from the plurality of to-be-set-up interfaces based on the interface setup trigger condition, the first communication interface that is to be set up next.

In a possible implementation, before the access network apparatus sends the first request to the target network apparatus, the method further includes: The access network apparatus receives the context identifier that is of the second communication interface and that is sent by the source network apparatus.

In this possible implementation, after receiving the context identifier of the second communication interface, the access network apparatus may notify, in the first request, the target network apparatus of the context identifier of the second communication interface. In this way, efficiency of setting up the first communication interface can be improved.

In a possible implementation, before the access network apparatus sends the first request to the target network apparatus, the method further includes: The access network apparatus receives context parameters that are of the plurality of to-be-set-up communication interfaces and that are sent by the source network apparatus, where the context parameters of the plurality of to-be-set-up communication interfaces include the context parameter of the first communication interface.

In this possible implementation, the source network apparatus may pre-obtain the context parameters of the plurality of to-be-set-up communication interfaces for the access network apparatus. In this way, when setting up the first communication interface, the access network apparatus no longer needs to negotiate with the target network apparatus to determine the context parameter of the first communication interface, to improve efficiency of setting up the first communication interface.

In a possible implementation, the interface setup trigger condition includes at least one of the following: validity duration of each to-be-set-up communication interface, a spatial position of the access network apparatus, an angle of the access network apparatus relative to a network apparatus to which each to-be-set-up communication interface belongs, a priority of each to-be-set-up communication interface, and use of each to-be-set-up communication interface.

In this possible implementation, the validity duration of the communication interface may be start time and end time at which the communication interface is valid, or may be start time and offset time, where the offset time is a validity time length. The spatial position of the access network apparatus may be a position of the access network apparatus in an agreed coordinate system (for example, a geodetic coordinate system). Because positions of network apparatuses such as the source network apparatus and the target network apparatus are usually fixed, a relative position between the access network apparatus and the source network apparatus or the target network apparatus may be determined based on the spatial position of the access network apparatus. The angle of the access network apparatus relative to the network apparatus to which each to-be-set-up communication interface belongs may be an elevation or an azimuth of the access network apparatus relative to the network apparatus to which each to-be-set-up communication interface belongs. The priority of the to-be-set-up communication interface may indicate a setup priority of each to-be-set-up communication interface in a numerical manner. Each to-be-set-up communication interface may be used as a backup interface when a link fails, a target interface for link switching, or the like. In this application, stability of the setup communication interface can be improved by using one or a combination of the foregoing interface setup trigger conditions.

In a possible implementation, the method further includes: The access network apparatus selects the second communication interface for a terminal device from the plurality of communication interfaces, where each of the plurality of communication interfaces is a communication interface between the access network apparatus and a different network apparatus, and the second communication interface is a communication interface whose validity period and/or first weight meet/meets a communication requirement in the plurality of communication interfaces.

In this possible implementation, when selecting the second communication interface, the access network apparatus may perform selection based on validity periods and first weights of the plurality of communication interfaces, to determine the second communication interface whose validity period and first weight both meet the communication requirement. In this way, communication stability and reliability of the access network apparatus and the source network apparatus can be improved.

In a possible implementation, the first weight is obtained based on an initial weight reported by the different network apparatus and a weight change rate.

In this possible implementation, the initial weight of the communication interface for the different network apparatus may be reported by each network apparatus. Considering that the access network apparatus may move, a first weight of each of the communication interfaces also changes with time. The first weight may be determined by using the following relational expression: Weighₜ₂=Weightₜ₁-Weight_rate*(t2-t1), where Weightₜ₂ is a first weight at a moment t2, Weightₜ₁ (which may also be understood as an initial weight) is a weight at a moment t1, and Weight_rate is a weight change rate. The first weight in this application changes with time. In this way, a first communication interface that is more suitable for the access network apparatus can be determined.

In a possible implementation, the second communication interface includes a plurality of transport network layers (transport network layers, TNLs), and the method further includes: The access network apparatus determines, from the plurality of TNLs based on a validity period of each TNL, a target TNL for binding the terminal device.

In this possible implementation, one communication interface may correspond to a plurality of TNLs, and different TNLs may be for binding different terminal devices, to provide services for different users. In this way, data interference between the users can be effectively reduced.

In a possible implementation, the validity period of the TNL is related to at least one of the spatial position of the access network apparatus, the angle of the access network apparatus relative to the network apparatus to which each to-be-set-up communication interface belongs, and a second weight of the TNL.

In this possible implementation, the second weight of the TNL may also change at any time. For a change manner, refer to the first weight of the communication interface for understanding.

In a possible implementation, the method further includes: The access network apparatus creates, deletes, or updates the TNL in the second communication interface based on a TNL management indication.

In this possible implementation, the access network apparatus may manage the TNL. In this way, utilization of the communication interface can be improved.

According to a second aspect of this application, a communication method is provided. The method may be performed by a target network apparatus. The target network apparatus herein may be a specific target network apparatus, or may be a processor, a module, a chip, a chip system, or the like that is in the target network apparatus and that implements the method. The method includes: The target network apparatus receives a first request from an access network apparatus, where the first request is for requesting to set up a first communication interface between the access network apparatus and the target network apparatus; the target network apparatus sends a first response, where the first response indicates that the target network apparatus has configured a context parameter of the first communication interface; and the target network apparatus communicates with the access network apparatus through the first communication interface.

In this application, before a communication link between the access network apparatus and a source network apparatus deteriorates, the target network apparatus may set up the first communication interface with the access network apparatus in advance, and perform a communication connection to the access network apparatus through the first communication interface, to improve communication continuity and reliability.

In a possible implementation, the first request includes a context identifier of a second communication interface, and the method further includes: The target network apparatus obtains a context parameter of the second communication interface from the source network apparatus based on the context identifier of the second communication interface; and the target network apparatus determines an updated parameter based on the context parameter of the second communication interface, where the updated parameter is a parameter that is of the first communication interface and that changes relative to that of the second communication interface; and correspondingly, the first response includes the updated parameter.

In this possible implementation, after receiving the context identifier of the second communication interface, the target network apparatus may obtain a corresponding context parameter of the second communication interface from the source network apparatus. In this way, the target network apparatus only needs to update a parameter that is different from that of the first communication interface and that is in the context parameter of the second communication interface, to determine the context parameter of the first communication interface, and then send an updated parameter to the access network apparatus. The access network apparatus also only needs to update, based on the updated parameter, the parameter that is different from that of the first communication interface and that is in the context parameter of the second communication interface, to determine the context parameter of the first communication interface. In this way, efficiency of setting up the first communication interface can be improved.

In a possible implementation, the first request includes a context identifier of the first communication interface, and the method further includes: The target network apparatus configures the context parameter of the first communication interface based on the context identifier of the first communication interface.

In this possible implementation, the target network apparatus only needs to find a previously configured context parameter of the first communication interface, so that the first communication interface can be set up. In this way, efficiency of setting up the first communication interface can be improved.

In a possible implementation, before the target network apparatus receives the first request from the access network apparatus, the method further includes: The target network apparatus sends the identifier of the first communication interface and the context parameter of the first communication interface to the source network apparatus.

In this possible implementation, the target network apparatus may pre-send the context parameter of the first communication interface to the source network apparatus. In this way, the efficiency of subsequently setting up the first communication interface can be improved.

According to a third aspect of this application, a communication method is provided. The method may be performed by a source network apparatus. The source network apparatus herein may be a specific source network apparatus, or may be a processor, a module, a chip, a chip system, or the like that is in the source network apparatus and that implements the method. The method includes: The source network apparatus receives a second request from an access network apparatus, where the second request is for requesting to set up a second communication interface between the access network apparatus and the source network apparatus; and the source network apparatus sends a second response to the access network apparatus, where the second response includes interface switching information, the interface switching information is used by the access network apparatus to switch a corresponding communication interface from the second communication interface to a first communication interface, and the first communication interface is a communication interface between the access network apparatus and a target network apparatus.

In this application, when setting up the second communication interface with the access network apparatus, the source network apparatus may notify the access network apparatus of the interface switching information for setting up the first communication interface, to improve efficiency of subsequently setting up the first communication interface.

In a possible implementation, the interface switching information includes a context identifier of the second communication interface, and when the access network apparatus requests to set up the first communication interface with the target network apparatus, the context identifier of the second communication interface is used by the target network apparatus to obtain a context parameter of the second communication interface from the source network apparatus.

In this possible implementation, the source network apparatus may notify the access network apparatus of the context identifier of the second communication interface. In this way, when setting up the first communication interface, the access network apparatus may notify the target network apparatus of the second communication interface, so that the target network apparatus obtains a corresponding context parameter of the second communication interface from the source network apparatus for parameter update, and efficiency of setting up the first communication interface can be improved.

In a possible implementation, the interface switching information includes context parameters of a plurality of to-be-set-up communication interfaces, the context parameters of all the to-be-set-up communication interfaces are from different network apparatuses, and the different network apparatuses include the target network apparatus.

In this possible implementation, the source network apparatus pre-notifies the context parameters of the plurality of to-be-set-up communication interfaces from the different network apparatuses to the access network apparatus, so that efficiency of subsequently setting up the first communication interface can be improved.

In a possible implementation, after the source network apparatus sends the second response to the access network apparatus, the method further includes: The source network apparatus sends a configuration update request to the access network apparatus, where the configuration update request includes a context identifier of the first communication interface, and the context identifier of the first communication interface is used by the access network apparatus to indicate the target network apparatus to configure a context parameter of the first communication interface.

In this possible implementation, the source network apparatus may indicate, in a configuration update manner, the access network apparatus to set up the first communication interface. In this way, that there is no available communication interface when a communication link between the access network apparatus and the source network apparatus deteriorates can be avoided. In this way, communication continuity and reliability can be improved.

According to a fourth aspect of this application, a communication apparatus is provided. The communication apparatus includes:
a transceiver module, configured to send a first request to a target network apparatus, where the first request is for requesting to set up a first communication interface between an access network apparatus and the target network apparatus, where
the transceiver module is further configured to receive a first response from the target network apparatus, where the first response indicates that the target network apparatus has configured a context parameter of the first communication interface; and
a processing module, configured to: set up the first communication interface with the target network apparatus based on the context parameter of the first communication interface; and switch a corresponding communication interface from a second communication interface to the first communication interface, where the second communication interface is a communication interface between the access network apparatus and a source network apparatus.

In a possible implementation, the first request includes a context identifier of the second communication interface, and the context identifier of the second communication interface is used by the target network apparatus to obtain a context parameter of the second communication interface from the source network apparatus; and the first response includes an updated parameter, and the updated parameter is a parameter that is of the first communication interface and that changes relative to that of the second communication interface.

In a possible implementation, the first request includes a context identifier of the first communication interface, and the context identifier of the first communication interface is used by the target network apparatus to configure the context parameter of the first communication interface.

In a possible implementation, the context identifier of the first communication interface is notified by the source network apparatus to the access network apparatus.

In a possible implementation, the context identifier of the first communication interface is determined by the access network apparatus from a plurality of to-be-set-up communication interfaces based on an interface setup trigger condition.

In a possible implementation, the transceiver module is further configured to receive the context identifier that is of the second communication interface and that is sent by the source network apparatus.

In a possible implementation, the transceiver module is further configured to receive context parameters of the plurality of to-be-set-up communication interfaces sent by the source network apparatus, where the context parameters of the plurality of to-be-set-up communication interfaces include the context parameter of the first communication interface.

In a possible implementation, the interface setup trigger condition includes at least one of the following: validity duration of each to-be-set-up communication interface, a spatial position of the access network apparatus, an angle of the access network apparatus relative to a network apparatus to which each to-be-set-up communication interface belongs, a priority of each to-be-set-up communication interface, and use of each to-be-set-up communication interface.

In a possible implementation, the processing module is further configured to select the second communication interface for a terminal device from the plurality of communication interfaces, where each of the plurality of communication interfaces is a communication interface between the access network apparatus and a different network apparatus, and the second communication interface is a communication interface whose validity period and/or first weight meet/meets a communication requirement in the plurality of communication interfaces.

In a possible implementation, the first weight is obtained based on an initial weight reported by the different network apparatus and a weight change rate.

In a possible implementation, the processing module is further configured to: when the second communication interface includes a plurality of transport network layers TNLs, determine, from the plurality of TNLs based on a validity period of each TNL, a target TNL for binding the terminal device.

In a possible implementation, the validity period of the TNL is related to at least one of the spatial position of the access network apparatus, the angle of the access network apparatus relative to the network apparatus to which each to-be-set-up communication interface belongs, and a second weight of the TNL.

In a possible implementation, the processing module is further configured to create, delete, or update the TNL in the second communication interface based on a TNL management indication.

According to a fifth aspect of this application, a communication apparatus is provided. The communication apparatus includes:
a transceiver module, configured to: receive a first request from an access network apparatus, where the first request is for requesting to set up a first communication interface between the access network apparatus and a target network apparatus; send a first response, where the first response indicates that the target network apparatus has configured a context parameter of the first communication interface; and communicate with the access network apparatus through the first communication interface.

In a possible implementation, a processing module is configured to: when the first request includes a context identifier of a second communication interface, obtain a context parameter of the second communication interface from a source network apparatus based on the context identifier of the second communication interface; and determine an updated parameter based on the context parameter of the second communication interface, where the updated parameter is a parameter that is of the first communication interface and that changes relative to that of the second communication interface; and correspondingly, the first response includes the updated parameter.

In a possible implementation, a processing module is configured to: when the first request includes a context identifier of the first communication interface, configure the context parameter of the first communication interface based on the context identifier of the first communication interface.

In a possible implementation, the transceiver module is further configured to send the identifier of the first communication interface and the context parameter of the first communication interface to a source network apparatus.

According to a sixth aspect of this application, a communication apparatus is provided. The communication apparatus includes:
a transceiver module, configured to receive a second request from an access network apparatus, where the second request is for requesting to set up a second communication interface between the access network apparatus and a source network apparatus; and
a processing module, configured to determine interface switching information, where
the transceiver module is further configured to send a second response to the access network apparatus, where the second response includes the interface switching information, the interface switching information is used by the access network apparatus to switch a corresponding communication interface from the second communication interface to a first communication interface, and the first communication interface is a communication interface between the access network apparatus and a target network apparatus.

In a possible implementation, the interface switching information includes a context identifier of the second communication interface, and when the access network apparatus requests to set up the first communication interface with the target network apparatus, the context identifier of the second communication interface is used by the target network apparatus to obtain a context parameter of the second communication interface from the source network apparatus.

In a possible implementation, the interface switching information includes context parameters of a plurality of to-be-set-up communication interfaces, the context parameters of all the to-be-set-up communication interfaces are from different network apparatuses, and the different network apparatuses include the target network apparatus.

In a possible implementation, the transceiver module is further configured to send a configuration update request to the access network apparatus, where the configuration update request includes a context identifier of the first communication interface, and the context identifier of the first communication interface is used by the access network apparatus to indicate the target network apparatus to configure a context parameter of the first communication interface.

According to a seventh aspect of this application, a communication apparatus is provided. The communication apparatus includes a processor, a storage, and a transceiver. The storage stores a computer program or computer instructions. The processor is configured to invoke and run the computer program or the computer instructions stored in the storage, to cause the processor to implement a processing operation in the first aspect and any one of the implementations of the first aspect. The transceiver is configured to receive and send a signal, for example, implement receiving and sending operations in the first aspect and any one of the implementations of the first aspect.

According to an eighth aspect of this application, a communication apparatus is provided. The communication apparatus includes a processor, a storage, and a transceiver. The storage stores a computer program or computer instructions. The processor is configured to invoke and run the computer program or the computer instructions stored in the storage, to cause the processor to implement a processing operation in the second aspect and any one of the implementations of the second aspect. The transceiver is configured to receive and send a signal, for example, implement receiving and sending operations in the second aspect and any one of the implementations of the second aspect.

According to a ninth aspect of this application, a communication apparatus is provided. The communication apparatus includes a processor, a storage, and a transceiver. The storage stores a computer program or computer instructions. The processor is configured to invoke and run the computer program or the computer instructions stored in the storage, to cause the processor to implement a processing operation in the third aspect and any one of the implementations of the third aspect. The transceiver is configured to receive and send a signal, for example, implement receiving and sending operations in the third aspect and any one of the implementations of the third aspect.

According to a tenth aspect of this application, a communication apparatus is provided. The communication apparatus includes a processor. The processor is configured to perform the first aspect and any one of the implementations of the first aspect.

According to an eleventh aspect of this application, a communication apparatus is provided. The communication apparatus includes a processor. The processor is configured to perform the second aspect and any one of the implementations of the second aspect.

According to a twelfth aspect of this application, a communication apparatus is provided. The communication apparatus includes a processor. The processor is configured to perform the third aspect and any one of the implementations of the third aspect.

According to a thirteenth aspect of this application, a computer-readable storage medium is provided, and includes computer instructions. When the instructions are run on a computer, the computer is caused to perform the first aspect and any one of the implementations of the first aspect.

According to a fourteenth aspect of this application, a computer-readable storage medium is provided, and includes computer instructions. When the instructions are run on a computer, the computer is caused to perform the second aspect and any one of the implementations of the second aspect.

According to a fifteenth aspect of this application, a computer-readable storage medium is provided, and includes computer instructions. When the instructions are run on a computer, the computer is caused to perform the third aspect and any one of the implementations of the third aspect.

According to a sixteenth aspect of this application, a computer program product including instructions is provided. When the computer program product runs on a computer, the computer is caused to perform the first aspect and any one of the implementations of the first aspect.

According to a seventeenth aspect of this application, a computer program product including instructions is provided. When the computer program product runs on a computer, the computer is caused to perform the second aspect and any one of the implementations of the second aspect.

According to an eighteenth aspect of this application, a computer program product including instructions is provided. When the computer program product runs on a computer, the computer is caused to perform the third aspect and any one of the implementations of the third aspect.

According to a nineteenth aspect of this application, a chip apparatus is provided, and includes a processor configured to invoke a computer program or computer instructions in a storage, to cause the processor to perform the first aspect and any one of the implementations of the first aspect.

Optionally, the processor is coupled to the storage through an interface.

According to a twentieth aspect of this application, a chip apparatus is provided, and includes a processor configured to invoke a computer program or computer instructions in a storage, to cause the processor to perform the second aspect and any one of the implementations of the second aspect.

Optionally, the processor is coupled to the storage through an interface.

According to a twenty-first aspect of this application, a chip apparatus is provided, and includes a processor configured to invoke a computer program or computer instructions in a storage, to cause the processor to perform the third aspect and any one of the implementations of the third aspect.

Optionally, the processor is coupled to the storage through an interface.

According to a twenty-second aspect of this application, a communication system is provided, and includes an access network apparatus, a source network apparatus, and a target network apparatus. The access network apparatus is configured to perform the method according to the first aspect and any one of the implementations of the first aspect; the target network apparatus is configured to perform the method according to the second aspect and any one of the implementations of the second aspect; and the access network apparatus is configured to perform the method according to the third aspect and any one of the implementations of the third aspect.

For the technical effects of the fourth aspect, the seventh aspect, the tenth aspect, the thirteenth aspect, the sixteenth aspect, and the nineteenth aspect of this application, refer to technical effects of the first aspect and any one of the implementations of the first aspect for understanding. For the technical effects of the fifth aspect, the eighth aspect, the eleventh aspect, the fourteenth aspect, the seventeenth aspect, and the twentieth aspect of this application, refer to technical effects of the second aspect and any one of the implementations of the second aspect for understanding. For the technical effects of the sixth aspect, the ninth aspect, the twelfth aspect, the fifteenth aspect, the eighteenth aspect, and the twenty-first aspect of this application, refer to technical effects of the third aspect and any one of the implementations of the third aspect for understanding.

### BRIEF DESCRIPTION OF DRAWINGS

FIG. 1A is a diagram of an architecture of a communication system according to an embodiment of this application;
FIG. 1B is a diagram of another architecture of a communication system according to an embodiment of this application;
FIG. 1C is a diagram of another architecture of a communication system according to an embodiment of this application;
FIG. 2 is a diagram of an embodiment of a communication method according to an embodiment of this application;
FIG. 3 is a diagram of another embodiment of a communication method according to an embodiment of this application;
FIG. 4 is a diagram of another embodiment of a communication method according to an embodiment of this application;
FIG. 5 is a diagram of another embodiment of a communication method according to an embodiment of this application;
FIG. 6 is a diagram of a scenario example of a communication method according to an embodiment of this application;
FIG. 7 is a diagram of a protocol layer architecture in a communication method according to an embodiment of this application;
FIG. 8 is a diagram of a structure of a communication apparatus according to an embodiment of this application;
FIG. 9 is a diagram of another structure of a communication apparatus according to an embodiment of this application;
FIG. 10 is a diagram of another structure of a communication apparatus according to an embodiment of this application; and
FIG. 11 is a diagram of another structure of a communication apparatus according to an embodiment of this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that, with development of technologies and emergence of new scenarios, technical solutions provided in embodiments of this application are also applicable to similar technical problems.

In the specification, the claims, and the accompanying drawings of this application, terms such as "first" and "second" are used for distinguishing between similar objects, but are not necessarily used for describing a specific order or sequence. It should be understood that, data used in such a way is interchangeable in appropriate circumstances, so that embodiments described herein can be implemented in an order other than the order illustrated or described herein. In addition, terms "include", "have", and any other variants thereof mean to cover a non-exclusive inclusion. For example, a process, a method, a system, a product, or a device that includes a list of steps or units is not necessarily limited to steps or units expressly listed, but may include other steps or units not expressly listed or inherent to such a process, method, product, or device.

Embodiments of this application provide a communication method, to improve communication continuity and reliability. Embodiments of this application further provide a corresponding apparatus, a communication system, a computer-readable storage medium, a computer program product, and the like. The following provides detailed descriptions separately.

The technical solutions in embodiments of this application are applicable to various communication systems, such as a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle-to-everything (vehicle-to-everything, V2X) communication system.

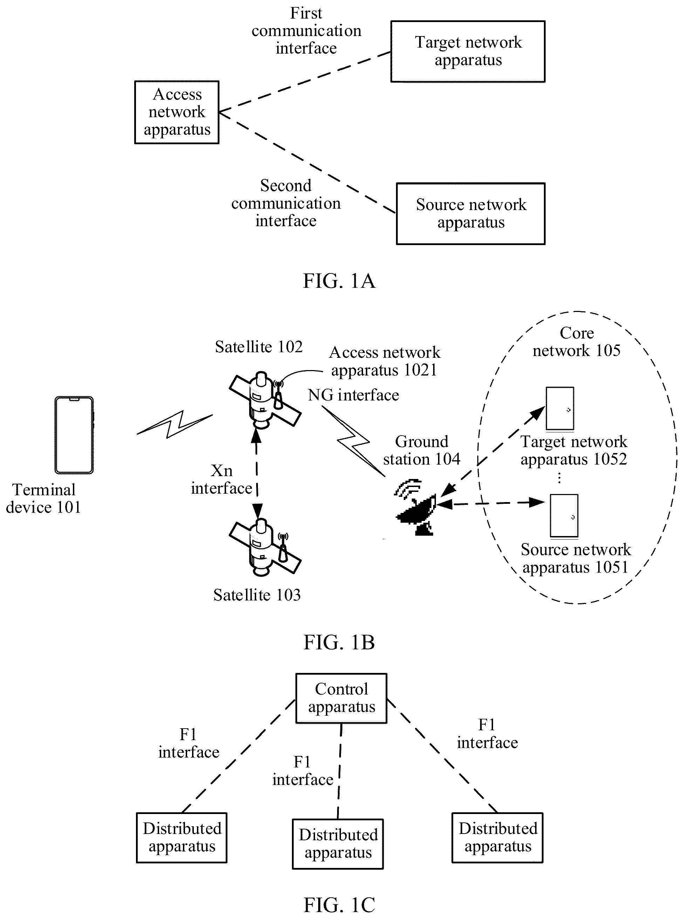

As shown in FIG. 1A, the communication system provided in embodiments of this application may include an access network apparatus, a source network apparatus, and a target network apparatus. The access network apparatus is connected to the source network apparatus and the target network apparatus in a wireless manner. The access network apparatus may pre-set up a first communication interface with the target network apparatus, and then switch a communication connection from a second communication interface with the source network apparatus to the first communication interface with the target network apparatus.

The communication system provided in embodiments of this application may be a satellite communication system, a high-altitude platform communication system, a distributed system in which wireless communication may be performed between a control apparatus and a distributed apparatus, or a cloud system in which wireless communication may be performed between devices.

In the satellite communication system or the high-altitude platform communication system, the access network apparatus provided in embodiments of this application may be a base station or some components of the base station mounted on a satellite or a high-altitude platform, and the source network apparatus and the target network apparatus may be core network elements, or the source network apparatus and the target network apparatus may be base stations or other apparatuses that can communicate with the access network apparatus. In the high-altitude platform communication system, the high-altitude platform may be an unmanned aerial vehicle, a hot air balloon, or the like.

In the distributed system in which wireless communication may be performed between apparatuses, the access network apparatus may alternatively be a control apparatus (central unit, CU) in the distributed system, and the source network apparatus and the target network apparatus are distributed apparatuses (distributed, DU) in the distributed system.

In the cloud system in which wireless communication may be performed between devices, the access network apparatus, the source network apparatus, and the target network apparatus may be different devices in the cloud system.

The following describes the satellite communication system with reference to FIG. 1B.

As shown in FIG. 1B, the satellite communication system includes a terminal device 101, a satellite 102, a satellite 103, a ground station 104, and a core network 105. An access network apparatus 1021 is mounted on the satellite 102. The core network 105 may include a plurality of network apparatuses, and may include a source network apparatus 1051 and a target network apparatus 1052. The terminal device 101 may set up a communication connection to the access network apparatus 1021 on the satellite 102 through an air interface, and the access network apparatus 1021 may communicate with the core network 104 via the ground station 104. As the satellite 102 moves, the access network apparatus 1021 also moves accordingly. In this way, the access network apparatus 1021 may be about to move out of a service coverage of the source network apparatus 1051 and is about to enter a service coverage of the target network apparatus 1052. To maintain communication continuity and stability of the terminal device 101, the access network apparatus 1021 may pre-set up a first communication interface with the target network apparatus 1052. After the interface is set up, a communication interface that provides services for the terminal device 101 may be switched from a second communication interface with the source network apparatus 1051 to the first communication interface with the target network apparatus 1052.

The terminal device may be a wireless terminal device that can receive scheduling and indication information from a network device. The wireless terminal device may be a device that provides voice and/or data connectivity for a user, a handheld device having a wireless connection function, or another processing device connected to a wireless modem.

In FIG. 1B, the terminal device is illustrated by using a mobile phone as an example. Actually, the terminal device may be a wireless terminal device that can receive scheduling and indication information from an access network apparatus. The wireless terminal device may be a device that provides voice and/or data connectivity for a user, a handheld device having a wireless connection function, or another processing device connected to a wireless modem. The wireless terminal device may communicate with one or more core networks or the internet via a radio access network (for example, radio access network, RAN). The wireless terminal device may be a mobile terminal device, for example, a mobile phone (also referred to as a "cellular" phone or a cell phone (mobile phone)), a computer, and a data card, for example, may be a portable, pocket-sized, handheld, computer built-in, or vehicle-mounted mobile apparatus that exchanges a language and/or data with the radio access network. For example, the terminal device is a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having wireless sending and receiving functions. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), a terminal device (user equipment, UE), a mobile terminal (mobile terminal, MT), or the like. For example, the wireless terminal device may be a wireless terminal in vehicle-to-everything, or may be a vehicle-mounted device, a vehicle device, a vehicle-mounted module, a vehicle, or the like. Alternatively, the wireless terminal device may be a wearable device, and a terminal device in a next-generation communication system, for example, a terminal device in a 5G network, a terminal device in a future evolved public land mobile network (public land mobile network, PLMN) network, or a terminal device in an NR communication system.

The access network apparatus may be a device in a wireless network. For example, the access network apparatus is a device that is deployed in a radio access network and that provides a wireless communication function for a terminal device. For example, the access network apparatus may be a radio access network (radio access network, RAN) node that connects a terminal device to a wireless network, and may also be referred to as an access network device.

The access network apparatus includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), and the like, or may be an access network apparatus in a 5G mobile communication system, for example, a next generation NodeB (next generation NodeB, gNB), a transmission reception point (transmission reception point, TRP), or a transmission point (transmission point, TP) in a new radio (new radio, NR) system, or one or a group of antenna panels (including a plurality of antenna panels) of a base station in the 5G mobile communication system. Alternatively, the access network apparatus may be a network node forming a gNB or a transmission point, for example, a baseband unit (baseband unit, BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and functions related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that, the access network apparatus may be a device including one or more of a CU node, a DU node, and an AAU node. In addition, the CU may be classified as an access network apparatus in an access network (radio access network, RAN), or the CU may be classified as an access network apparatus in a core network (core network, CN). This is not limited in this application.

The ground station is configured to forward signaling and service data between the radio access network apparatus on the satellite and the core network.

The core network can perform services such as user access control, mobility management, session management, user security authentication, and charging. The core network may include a plurality of function units, and can be divided into a control-plane functional entity and a data-plane functional entity. For example, the network apparatus in the core network may include one or more of the following function units: an access and mobility management function (access and mobility management function, AMF) unit, a session management function (session management function, SMF) unit, a unified data management (unified data management, UDM) unit, a policy control function (policy control function, PCF) unit, a user plane function (user plane function, UPF) unit, and a policy and charging control (policy and charging control, PCC) unit.

The source network apparatus and the target network apparatus may be function units of a same type in the foregoing function units. For example, both the source network apparatus and the target network apparatus are AMFs.

In the satellite communication system shown in FIG. 1B, the first communication interface and the second communication interface may be next generation (next generation, NG) interfaces between the base station and the core network element, for example, communication interfaces between the access network apparatus 1021 and the source network apparatus 1051 or the target network apparatus 1052 in the core network 105. Alternatively, the first communication interface and the second communication interface may be Xn interfaces between base stations, for example, communication interfaces between the access network apparatus 1021 on the satellite 102 and an access network apparatus on the satellite 103.

It is clear that in another communication system, a name of the communication interface may be different. As shown in FIG. 1C, in the distributed system, the communication interface may be an F1 interface between the control apparatus and the distributed apparatus. It is clear that the first communication interface and the second communication interface may alternatively be communication interfaces with other names. This is not limited in this application. The solutions of this application are applicable to management of communication interfaces between the access network apparatus and non-terminal devices that perform wireless communication with the access network apparatus.

The foregoing describes the communication system provided in embodiments of this application. The following describes a communication method provided in embodiments of this application with reference to the accompanying drawings.

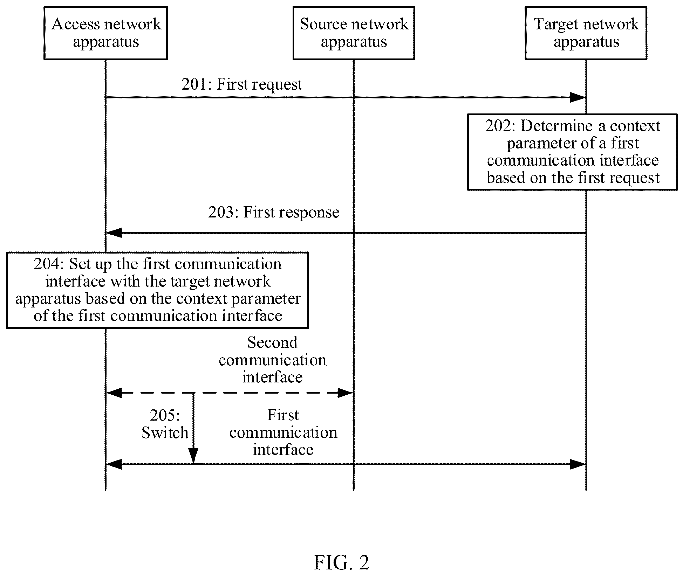

FIG. 2 is a diagram of an embodiment of a communication method according to an embodiment of this application.

As shown in FIG. 2, the embodiment of the communication method according to this embodiment of this application includes the following steps.

201: An access network apparatus sends a first request to a target network apparatus, where the first request is for requesting to set up a first communication interface between the access network apparatus and the target network apparatus. Correspondingly, the target network apparatus receives the first request from the access network apparatus.

In this application, the first request may be an interface resume request (for example, a resume request).

202: The target network apparatus determines a context parameter of the first communication interface based on the first request.

In this application, each communication interface has a set of context parameters. The set of context parameters may include at least one of the following parameters: a transmission configuration parameter, configuration parameters of apparatuses at two ends of the interface, a user context, and a session context.

The transmission configuration parameter may include a protocol version of a transport layer, an address protocol of the transport layer (for example, a port number or an IP address (when a stream control transmission protocol (stream control transmission protocol, SCTP)/an internet protocol (internet protocol, IP) is used), a port number, a tunnel ID, or the like when a general packet radio service tunneling protocol (general packet radio service Tunneling Protocol, GTP) is used, or protocol parameters of a link layer and a physical layer, such as parameter configurations of a radio link control (radio link control, RLC) layer/medium access control (medium access control, MAC) layer/physical (physical, PHY) layer when a Uu interface of NR is used as a layer 2 (layer 2, L2)/layer 1 (layer 1, L1) protocol), a configuration list of a transport network layer (Transport network layer, TNL), and the like.

The configuration parameters of the apparatuses at the two ends of the interface may include ID identifiers, apparatus names, apparatus capabilities (for example, supported network types, supported service types, or parameters of serving networks (for example, coverage, throughputs, delays, mobility management parameters, or slice parameters)), and the like of the apparatuses (for example, the access network apparatus and a source network apparatus, or the access network apparatus and the target network apparatus) at the two ends.

The user context may include a user ID, a core network configuration, an access network configuration, or a security configuration of each user, and the like that are carried on a current interface.

The session context may include a session ID, session quality of service (quality of service, QoS), and the like that are carried on a current interface.

203: The target network apparatus sends a first response, where the first response indicates that the target network apparatus has configured the context parameter of the first communication interface. Correspondingly, the access network apparatus receives the first response from the target network apparatus.

In this application, the first response may be a response to the interface resume request (for example, a resume request response to the resume request).

204: The access network apparatus sets up the first communication interface with the target network apparatus based on the context parameter of the first communication interface.

In this embodiment of this application, after the access network apparatus and the target network apparatus each have configured the context parameter of the first communication interface, it indicates that the setup of the first communication interface is completed.

205: The access network apparatus switches a corresponding communication interface from a second communication interface to the first communication interface, where the second communication interface is a communication interface between the access network apparatus and the source network apparatus.

In this application, when the access network apparatus is in service coverage of the source network apparatus, the access network apparatus may maintain a communication connection to the source network apparatus through the second communication interface. When the access network apparatus enters or is about to enter service coverage of the target network apparatus due to movement or another reason, the access network apparatus needs to switch, from the second communication interface to the first communication interface with the target network apparatus, the communication interface for maintaining the communication connection. In this application, the "corresponding communication interface" may be understood as a communication interface between the access network apparatus and a core network element, a communication interface between the access network apparatus and another access network apparatus, or the like.

In this application, before a communication link with the source network apparatus deteriorates, the access network apparatus may set up the communication interface with the target network apparatus in advance, and switch to the communication interface with the target network apparatus, so that communication continuity and reliability are improved.

In this embodiment of this application, a management process of the communication interface described in FIG. 2 may be implemented by using a plurality of different solutions. The following describes different implementation processes with reference to the accompanying drawings.

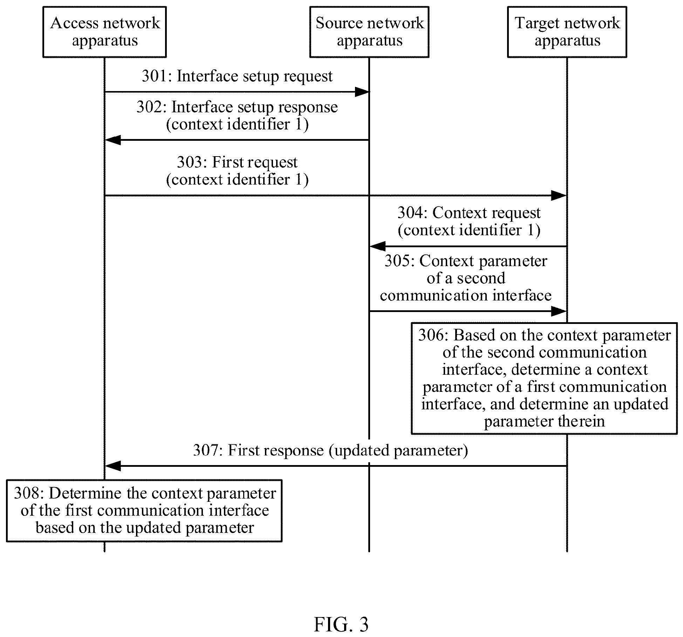

As shown in FIG. 3, another embodiment of a communication method according to an embodiment of this application includes the following steps.

301: An access network apparatus sends an interface setup request to a source network apparatus. Correspondingly, the source network apparatus receives the interface setup request from the access network apparatus.

The interface setup request may be a setup request, and the interface setup request is for negotiating with the source network apparatus about a context parameter of a second communication interface between the access network apparatus and the source network apparatus. The interface setup request may alternatively be another type of request. This type of request for requesting to set up an interface may also be referred to as a second request.

302: The source network apparatus sends an interface setup response to the access network apparatus. Correspondingly, the access network apparatus receives the interface setup response from the source network apparatus.

The interface setup response may be a setup request response. The interface setup response may carry a context identifier 1, and the context identifier 1 is a context identifier of the second communication interface. The interface setup response may alternatively be another type of response. This type of response may also be referred to as a second response.

303: The access network apparatus sends a first request to a target network apparatus. Correspondingly, the target network apparatus receives the first request from the access network apparatus.

The first request includes the context identifier of the second communication interface (the context identifier 1).

The context identifier (context ID) of the second communication interface identifies the context parameter of the second communication interface. In this application, each communication interface has a set of context parameters. The set of context parameters may include at least one of the following parameters: a transmission configuration parameter, configuration parameters of apparatuses at two ends of the interface, a user context, and a session context. Each set of context parameters has a corresponding context identifier.

A satellite communication scenario is used as an example. A satellite-carried access network apparatus is about to leave service coverage of the source network apparatus and enter service coverage of the target network apparatus. In this case, a first communication interface with the target network apparatus may be set up by sending the first request.

304: The target network apparatus sends a context request to the source network apparatus based on the context identifier 1. Correspondingly, the source network apparatus receives the context request from the target network apparatus.

305: The source network apparatus returns the context parameter of the second communication interface to the target network apparatus based on the context identifier 1. Correspondingly, the target network apparatus receives the context parameter of the second communication interface from the source network apparatus.

306: Based on the context parameter of the second communication interface, the target network apparatus determines a context parameter of the first communication interface, and determines an updated parameter therein.

The target network apparatus may determine the context parameter of the first communication interface by updating a parameter that is different from that of the first communication interface and that is in the context parameter of the second communication interface.

307: The target network apparatus sends a first response to the access network apparatus. Correspondingly, the access network apparatus receives the first response from the target network apparatus.

The first response includes the updated parameter, and the updated parameter is a parameter that is of the first communication interface and that changes relative to that of the second communication interface.

308: The access network apparatus determines the context parameter of the first communication interface based on the updated parameter.

In this embodiment of this application, the access network apparatus sends the context identifier of the second communication interface to the target network apparatus, and the target network apparatus may obtain the corresponding context parameter of the second communication interface from the source network apparatus. In this way, the target network apparatus only needs to update the parameter that is different from that of the first communication interface and that is in the context parameter of the second communication interface, to determine the context parameter of the first communication interface, and then send the updated parameter to the access network apparatus. The access network apparatus also only needs to update, based on the updated parameter, the parameter that is different from that of the first communication interface and that is in the context parameter of the second communication interface, to determine the context parameter of the first communication interface. In this way, efficiency of setting up the first communication interface can be improved.

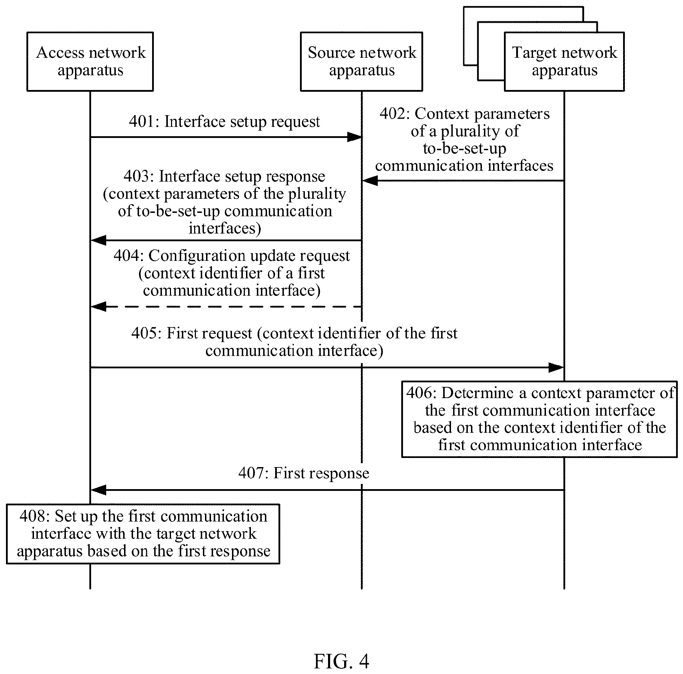

As shown in FIG. 4, another embodiment of a communication method according to an embodiment of this application includes the following steps.

401: An access network apparatus sends an interface setup request to a source network apparatus. Correspondingly, the source network apparatus receives the interface setup request from the access network apparatus.

402: The source network apparatus obtains context parameters of a plurality of to-be-set-up communication interfaces from a plurality of network apparatuses.

This process may be as follows: The source network apparatus sends a configuration request to each of the plurality of network apparatuses. After determining a context parameter of a to-be-set-up communication interface for each network apparatus, the network apparatus sends the context parameter of the to-be-set-up communication interface for the network apparatus to the source network apparatus. The plurality of network apparatuses include a target network apparatus.

403: The source network apparatus sends an interface setup response to the access network apparatus. Correspondingly, the access network apparatus receives the interface setup response from the source network apparatus.

The interface setup response may include the context parameters of the plurality of to-be-set-up communication interfaces, and the context parameters of the plurality of to-be-set-up communication interfaces include a context parameter of a first communication interface. The context parameters of the plurality of to-be-set-up communication interfaces may be sent to the access network apparatus in a form of a list.

404: The source network apparatus sends a configuration update request to the access network apparatus, where the configuration update request includes a context identifier of the first communication interface, and the context identifier of the first communication interface is used by the access network apparatus to indicate the target network apparatus to configure the context parameter of the first communication interface.

It should be noted that, step 404 is merely an optional implementation. The access network apparatus may alternatively be triggered in another manner to perform interface resumption.

405: The access network apparatus sends a first request to the target network apparatus. Correspondingly, the target network apparatus receives the first request.

The first request includes the context identifier of the first communication interface, and the context identifier of the first communication interface is used by the target network apparatus to configure the context parameter of the first communication interface.

406: The target network apparatus determines the context parameter of the first communication interface based on the context identifier of the first communication interface. In step 402, the target network apparatus has preconfigured the context parameter of the first communication interface. Therefore, after receiving the first request, the target network apparatus only needs to find the context parameter of the first communication interface based on the context identifier of the first communication interface.

407: The target network apparatus sends a first response to the access network apparatus. Correspondingly, the access network apparatus receives the first response from the target network apparatus.

408: The receiving network apparatus sets up the first communication interface with the target network apparatus based on the first response.

In step 403, the source network apparatus has sent the context parameters of the plurality of to-be-set-up communication interfaces. In this case, the access network apparatus may complete configuration of the context parameter of the first communication interface in the access network apparatus based only on the context identifier of the first communication interface in step 404.

In this embodiment of this application, the source network apparatus may determine the target network apparatus for the access network apparatus, and notify the access network apparatus of the context identifier of the first communication interface to be set up with the target network apparatus. The access network apparatus may directly send the context identifier of the first communication interface to the target network apparatus. In this way, the target network apparatus only needs to find the previously configured context parameter of the first communication interface to set up the first communication interface. In this way, efficiency of setting up the first communication interface can be improved.

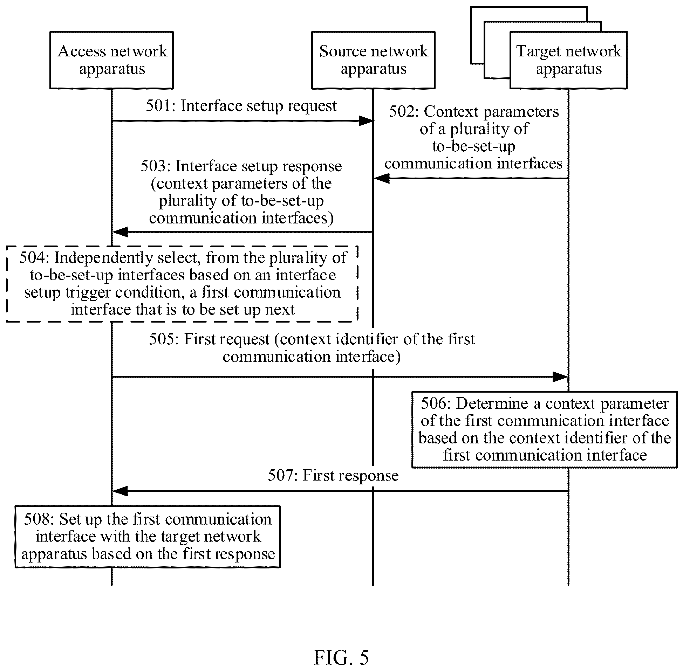

As shown in FIG. 5, another embodiment of a communication method according to an embodiment of this application includes the following steps.

501: An access network apparatus sends an interface setup request to a source network apparatus. Correspondingly, the source network apparatus receives the interface setup request from the access network apparatus.

502: The source network apparatus obtains context parameters of a plurality of to-be-set-up communication interfaces from a plurality of network apparatuses.

This process may be as follows: The source network apparatus sends a configuration request to each of the plurality of network apparatuses. After determining a context parameter of a to-be-set-up communication interface for each network apparatus, the network apparatus sends the context parameter of the to-be-set-up communication interface for the network apparatus to the source network apparatus. The plurality of network apparatuses include a target network apparatus.

503: The source network apparatus sends an interface setup response to the access network apparatus. Correspondingly, the access network apparatus receives the interface setup response from the source network apparatus.

The interface setup response may include the context parameters of the plurality of to-be-set-up communication interfaces, and the context parameters of the plurality of to-be-set-up communication interfaces include a context parameter of a first communication interface. The context parameters of the plurality of to-be-set-up communication interfaces may be sent to the access network apparatus in a form of a list.

504: The access network apparatus may independently select, from the plurality of to-be-set-up interfaces based on an interface setup trigger condition, the first communication interface that is to be set up next.

It should be noted that, step 504 is merely an optional implementation. The access network apparatus may alternatively be triggered in another manner to perform interface resumption.

505: The access network apparatus sends a first request to the target network apparatus. Correspondingly, the target network apparatus receives the first request.

The first request includes a context identifier of the first communication interface, and the context identifier of the first communication interface is used by the target network apparatus to configure the context parameter of the first communication interface.

506: The target network apparatus determines the context parameter of the first communication interface based on the context identifier of the first communication interface. In step 502, the target network apparatus has preconfigured the context parameter of the first communication interface. Therefore, after receiving the first request, the target network apparatus only needs to find the context parameter of the first communication interface based on the context identifier of the first communication interface.

507: The target network apparatus sends a first response to the access network apparatus. Correspondingly, the access network apparatus receives the first response from the target network apparatus.

508: The receiving network apparatus sets up the first communication interface with the target network apparatus based on the first response.

In this embodiment of this application, the access network apparatus may select, based on the interface setup trigger condition, the to-be-set-up first communication interface, and then the access network apparatus may directly send the context identifier of the first communication interface to the target network apparatus. In this way, the target network apparatus only needs to find the previously configured context parameter of the first communication interface to set up the first communication interface. In this way, efficiency of setting up the first communication interface can be improved.

In this embodiment of this application, the interface setup trigger condition includes at least one of the following: validity duration of each to-be-set-up communication interface, a spatial position of the access network apparatus, an angle of the access network apparatus relative to a network apparatus to which each to-be-set-up communication interface belongs, a priority of each to-be-set-up communication interface, and use of each to-be-set-up communication interface.

The validity duration of the communication interface may be start time and end time at which the communication interface is valid, or may be start time and offset time, where the offset time is a validity time length.

The spatial position of the access network apparatus may be a position of the access network apparatus in an agreed coordinate system (for example, a geodetic coordinate system). Because positions of network apparatuses such as the source network apparatus and the target network apparatus are usually fixed, a relative position between the access network apparatus and the source network apparatus or the target network apparatus may be determined based on the spatial position of the access network apparatus.

The angle of the access network apparatus relative to the network apparatus to which each to-be-set-up communication interface belongs may be an elevation or an azimuth of the access network apparatus relative to the network apparatus to which each to-be-set-up communication interface belongs.

The priority of the to-be-set-up communication interface may indicate a setup priority of each to-be-set-up communication interface in a numerical manner. For example, values ranging from 0 to 255 indicate different priorities. Each to-be-set-up communication interface may be used as a backup interface when a link fails, a target interface for link switching, or the like.

In this application, stability of the setup communication interface can be improved by using one or a combination of the foregoing interface setup trigger conditions.

In the foregoing embodiment, the access network apparatus selects a second communication interface for a terminal device from the plurality of communication interfaces, where each of the plurality of communication interfaces is a communication interface between the access network apparatus and a different network apparatus, and the second communication interface is a communication interface whose validity period and/or first weight meet/meets a communication requirement in the plurality of communication interfaces.

The first weight is obtained based on an initial weight reported by the different network apparatus and a weight change rate. The initial weight of the communication interface for the different network apparatus may be reported by each network apparatus. Considering that the access network apparatus may move, the first weight of each of the communication interfaces also changes with time. The first weight may be determined by using the following relational expression: Weightₜ₂=Weightₜ₁-Weight_rate*(t2-t1), where Weightₜ₂ is a first weight at a moment t2, Weightₜ₁ (which may also be understood as an initial weight) is a weight at a moment t1, and Weight_rate is a weight change rate. The first weight in this application changes with time. In this way, a first communication interface that is more suitable for the access network apparatus can be determined.

In this embodiment of this application, the second communication interface includes a plurality of transport network layers (transport network layers, TNLs), and the method further includes: The access network apparatus determines, from the plurality of TNLs based on a validity period of each TNL, a target TNL for binding the terminal device.

In this embodiment of this application, one communication interface may correspond to a plurality of TNLs, and different TNLs may be for binding different terminal devices, to provide services for different users. In this way, data interference between the users can be effectively reduced.

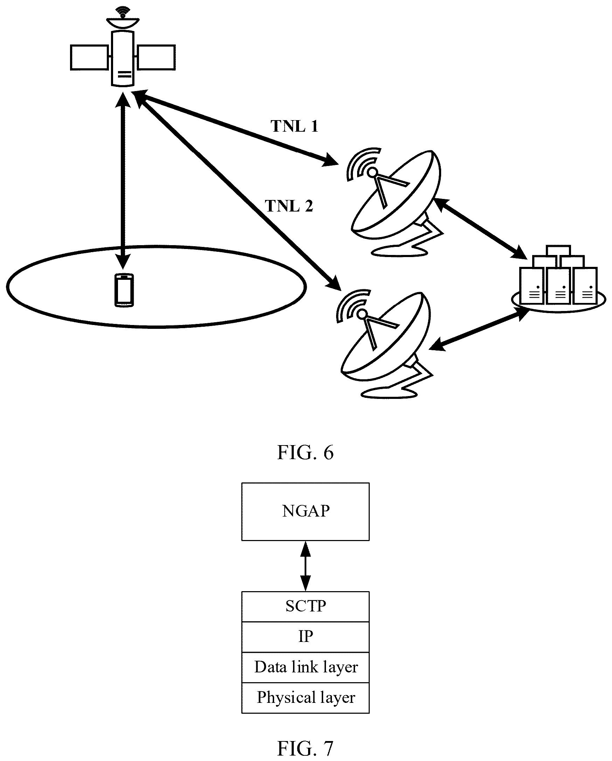

The TNL may be understood with reference to FIG. 6. As shown in FIG. 6, the access network apparatus may select a TNL 1 or a TNL 2 for the terminal device for binding. The access network apparatus may perform selection based on a validity period of the TNL.

The validity period of the TNL is related to at least one of the spatial position of the access network apparatus, the angle of the access network apparatus relative to the network apparatus to which each to-be-set-up communication interface belongs, and a second weight of the TNL.

The second weight may be understood with reference to the following relational expression: Weightₜ₄-Weightₜ₃-Weight_rate*(t4-t3), where Weightₜ₄ is a second weight at a moment t4, Weightₜ₃ (which may also be understood as an initial TNL weight) is a weight at a moment t3, and Weight_rate is a weight change rate.

The validity period of the TNL may be remaining time, termination time, or the like. A unit of the TNL may be a second or a millisecond, or may be described by using absolute time.

When creating NGAP UE-TNLA-binding for binding the TNL for the terminal device, the access network apparatus needs to consider a validity period of a TNL association.

In this embodiment of this application, as shown in FIG. 7, the TNL is set up above IP transmission. For reliable transmission of a signaling message, an SCTP protocol layer is set up above an IP protocol layer, and SCTP provides guaranteed transfer of an application layer message. An application layer signaling protocol is referred to as NGAP (NG Application Protocol). SCTP is a reliable datagram transmission protocol over a protocol that provides unreliable transmission services, is a connection-oriented stream transmission protocol, and can provide stable and ordered data delivery services between two endpoints.

In this embodiment of this application, the access network apparatus may manage the TNL, and the access network apparatus may create, delete, or update the TNL in the second communication interface based on a TNL management indication.

The TNL management indication may be sent by the source network apparatus or the target network apparatus to the access network apparatus. For example, the source network apparatus or the target network apparatus is an AMF in a core network.

An NG interface between the access network apparatus on a satellite and the AMF may include a plurality of TNL paths. The plurality of paths may be configured by the AMF for the access network apparatus by using an AMF configuration update message. The access network apparatus sets up a TNL association (TNL association) to the AMF based on the indication.

A TNL association validity (TNL association validity) field is added to an information element: AMF configuration update (AMF configuration update)->AMF TNL Association to Add List (AMF TNL Association to Add List)->AMF TNL Association to Add Item (AMF TNL Association to Add Item), to describe the validity period of the TNL association.

The AMF may add an Add_time field to the information element: AMF configuration update->AMF TNL Association to Add List->AMF TNL Association to Add Item, to describe time at which TNL association add is initiated.

A Remove_time field is added to an information element: AMF configuration update->AMF TNL Association to Remove List->AMF TNL Association to Remove Item, to describe time at which TNL association remove is initiated.

The AMF may indicate, to the access network apparatus by using a message like AMF configuration update, a mapping relationship between Active-TNL association and Backup-TNL association, that is, a TNL association parameter for replacement after a currently set-up TNL association is released.

The added information element may also be a trigger condition corresponding to an add/remove event, for example, a position relationship or an elevation/azimuth relationship between the access network apparatus and the AMF.

The solutions in the embodiments are also applicable to management of an interface between the access network apparatus and another type of terrestrial core network element (for example, a UPF).

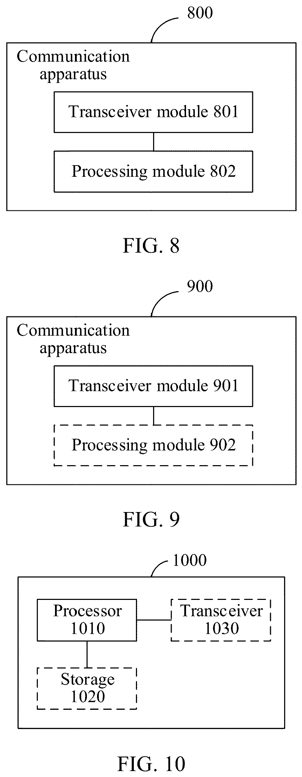

The foregoing describes the communication method and the communication system provided in embodiments of this application. The following describes a communication apparatus provided in embodiments of this application. FIG. 8 is a diagram of a structure of a communication apparatus according to an embodiment of this application. The communication apparatus 800 may be configured to perform a step performed by the access network apparatus in the embodiments shown in FIG. 2 to FIG. 7. For details, refer to related descriptions in the foregoing method embodiments.

The communication apparatus 800 includes a transceiver module 801 and a processing module 802. The transceiver module 801 may implement a corresponding communication function. The processing module 802 is configured to perform data processing. The transceiver module 801 may also be referred to as a communication interface or a communication unit.

Optionally, the communication apparatus 800 may further include a storage unit. The storage unit may be configured to store instructions and/or data. The processing module 802 may read the instructions and/or the data in the storage unit, to cause the communication apparatus to implement the foregoing method embodiments.

The communication apparatus 800 may be configured to perform an action performed by the access network apparatus in the foregoing method embodiments. The communication apparatus 800 may be a component of the access network apparatus, a host, or a component that can be configured with the host. The transceiver module 801 is configured to perform a receiving-related operation on an access network apparatus side in the foregoing method embodiments. The processing module 802 is configured to perform a processing-related operation on the access network apparatus side in the foregoing method embodiments.

Optionally, the transceiver module 801 may include a sending module and a receiving module. The sending module is configured to perform the sending operation in the foregoing method embodiments. The receiving module is configured to perform the receiving operation in the foregoing method embodiments.

In an example, the communication apparatus 800 is configured to perform an action performed by the access network apparatus in the embodiment shown in FIG. 2.

The transceiver module 801 is configured to send a first request to a target network apparatus, where the first request is for requesting to set up a first communication interface between the access network apparatus and the target network apparatus.

The transceiver module 801 is further configured to receive a first response from the target network apparatus, where the first response indicates that the target network apparatus has configured a context parameter of a first communication interface.

The processing module 802 is configured to: set up the first communication interface with the target network apparatus based on the context parameter of the first communication interface; and switch a corresponding communication interface from a second communication interface to the first communication interface, where the second communication interface is a communication interface between the access network apparatus and a source network apparatus.

In an example, the communication apparatus 800 is configured to perform an action performed by the access network apparatus in the embodiment shown in FIG. 3. The transceiver module 801 is configured to perform step 301 to step 303 and step 307 in the embodiment shown in FIG. 3. The processing module 802 is configured to perform step 308 in the embodiment shown in FIG. 3.

In an example, the communication apparatus 800 is configured to perform an action performed by the access network apparatus in the embodiment shown in FIG. 4. The transceiver module 801 is configured to perform step 401, step 403 to step 405, and step 407 in the embodiment shown in FIG. 4. The processing module 802 is configured to perform step 408 in the embodiment shown in FIG. 4.

In an example, the communication apparatus 800 is configured to perform an action performed by the access network apparatus in the embodiment shown in FIG. 5. The transceiver module 801 is configured to perform step 501, step 503, step 505, and step 507 in the embodiment shown in FIG. 5. The processing module 802 is configured to perform step 504 and step 508 in the embodiment shown in FIG. 4.

It should be understood that, a specific process in which each module performs the foregoing corresponding step has been described in detail in the foregoing method embodiments. For brevity, details are not described herein again.

The processing module 802 in the foregoing embodiment may be implemented by at least one processor or a processor-related circuit. The transceiver module 801 may be implemented by a transceiver or a transceiver-related circuit. The transceiver module 801 may also be referred to as a communication unit or a communication interface. The storage unit may be implemented by at least one storage.

The following describes a communication apparatus provided in embodiments of this application. FIG. 9 is a diagram of a structure of a communication apparatus according to an embodiment of this application. The communication apparatus 900 may be configured to perform a step performed by the target network apparatus in the embodiment shown in FIG. 2. For details, refer to the related descriptions in the foregoing method embodiments.

The communication apparatus 900 includes a transceiver module 901. Optionally, the communication apparatus 900 further includes a processing module 902. The transceiver module 901 may implement a corresponding communication function. The processing module 902 is configured to perform data processing. The transceiver module 901 may also be referred to as a communication interface or a communication unit.

The communication apparatus 900 may be configured to perform an action performed by the target network apparatus in the foregoing method embodiments. The communication apparatus 900 may be the target network apparatus or a component that can be configured in the target network apparatus. The transceiver module 901 is configured to perform a receiving-related operation on a target network apparatus side in the foregoing method embodiments.

Optionally, the transceiver module 901 may include a sending module and a receiving module. The sending module is configured to perform the sending operation in the foregoing method embodiments. The receiving module is configured to perform the receiving operation in the foregoing method embodiments.

In an example, the communication apparatus 900 is configured to perform an action performed by the target network apparatus in the embodiment shown in FIG. 2.

The transceiver module 901 is configured to: receive a first request from an access network apparatus, where the first request is for requesting to set up a first communication interface between the access network apparatus and the target network apparatus; send a first response, where the first response indicates that the target network apparatus has configured a context parameter of the first communication interface; and communicate with the access network apparatus through the first communication interface.

The processing module 902 is configured to: when the first request includes a context identifier of a second communication interface, obtain a context parameter of the second communication interface from a source network apparatus based on the context identifier of the second communication interface; and determine an updated parameter based on the context parameter of the second communication interface, where the updated parameter is a parameter that is of the first communication interface and that changes relative to that of the second communication interface; and correspondingly, the first response includes the updated parameter.

The processing module 902 is configured to: when the first request includes a context identifier of the first communication interface, configure the context parameter of the first communication interface based on the context identifier of the first communication interface.

The transceiver module 901 is further configured to send the identifier of the first communication interface and the context parameter of the first communication interface to a source network apparatus.

It should be understood that, a specific process in which each module performs the foregoing corresponding step has been described in detail in the foregoing method embodiments. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication unit or a communication interface. A storage unit may be implemented by at least one storage.

In addition, FIG. 9 may also be a diagram of a structure of a communication apparatus according to an embodiment of this application. The communication apparatus 900 may be configured to perform a step performed by the source network apparatus in the embodiment shown in FIG. 2. For details, refer to the related descriptions in the foregoing method embodiments.

The communication apparatus 900 includes a transceiver module 901. Optionally, the communication apparatus 900 further includes a processing module 902. The transceiver module 901 may implement a corresponding communication function. The processing module 902 is configured to perform data processing. The transceiver module 901 may also be referred to as a communication interface or a communication unit.

The communication apparatus 900 may be configured to perform an action performed by the source network apparatus in the foregoing method embodiments. The communication apparatus 900 may be the source network apparatus or a component that can be configured in the source network apparatus. The transceiver module 901 is configured to perform a receiving-related operation on a source network apparatus side in the foregoing method embodiments.

Optionally, the transceiver module 901 may include a sending module and a receiving module. The sending module is configured to perform the sending operation in the foregoing method embodiments. The receiving module is configured to perform the receiving operation in the foregoing method embodiments.

In an example, the communication apparatus 900 is configured to perform an action performed by the source network apparatus in the embodiment shown in FIG. 2.

The transceiver module 901 is configured to receive a second request from an access network apparatus, where the second request is for requesting to set up a second communication interface between the access network apparatus and the source network apparatus.

The processing module 902 is configured to determine interface switching information.

The transceiver module 901 is further configured to send a second response to the access network apparatus, where the second response includes the interface switching information, the interface switching information is used by the access network apparatus to switch a corresponding communication interface from the second communication interface to a first communication interface, and the first communication interface is a communication interface between the access network apparatus and a target network apparatus.

Optionally, the interface switching information includes a context identifier of the second communication interface, and when the access network apparatus requests to set up the first communication interface with the target network apparatus, the context identifier of the second communication interface is used by the target network apparatus to obtain a context parameter of the second communication interface from the source network apparatus.

Optionally, the interface switching information includes context parameters of a plurality of to-be-set-up communication interfaces, the context parameters of all the to-be-set-up communication interfaces are from different network apparatuses, and the different network apparatuses include the target network apparatus.

Optionally, the transceiver module 901 is further configured to send a configuration update request to the access network apparatus, where the configuration update request includes a context identifier of the first communication interface, and the context identifier of the first communication interface is used by the access network apparatus to indicate the target network apparatus to configure a context parameter of the first communication interface.

It should be understood that, a specific process in which each module performs the foregoing corresponding step has been described in detail in the foregoing method embodiments. For brevity, details are not described herein again.

The processing module 902 in the foregoing embodiment may be implemented by at least one processor or a processor-related circuit. The transceiver module 901 may be implemented by a transceiver or a transceiver-related circuit. The transceiver module 901 may also be referred to as a communication unit or a communication interface. A storage unit may be implemented by at least one storage.

An embodiment of this application further provides a communication apparatus 1000. The communication apparatus 1000 includes a processor 1010. The processor 1010 is coupled to a storage 1020. The storage 1020 is configured to store a computer program or instructions and/or data. The processor 1010 is configured to execute the computer program or the instructions and/or the data stored in the storage 1020, to cause the method in the foregoing method embodiments to be performed.

Optionally, the communication apparatus 1000 includes one or more processors 1010.

Optionally, as shown in FIG. 10, the communication apparatus 1000 may further include the storage 1020.

Optionally, the communication apparatus 1000 may include one or more storages 1020.

Optionally, the storage 1020 and the processor 1010 may be integrated together or separately disposed.

Optionally, as shown in FIG. 10, the communication apparatus 1000 may further include a transceiver 1030. The transceiver 1030 is configured to receive and/or send a signal. For example, the processor 1010 is configured to control the transceiver 1030 to receive and/or send a signal.

In a solution, the communication apparatus 1000 is configured to implement an operation performed by the access network apparatus in the foregoing method embodiments.

For example, the processor 1010 is configured to implement a processing-related operation performed by the access network apparatus in the foregoing method embodiments, and the transceiver 1030 is configured to implement sending and receiving-related operations performed by the access network apparatus in the foregoing method embodiments.

In another solution, the communication apparatus 1000 is configured to implement an operation performed by the source network apparatus in the foregoing method embodiments.

For example, the processor 1010 is configured to implement a processing-related operation performed by the source network apparatus in the foregoing method embodiments, and the transceiver 1030 is configured to implement sending and receiving-related operations performed by the source network apparatus in the foregoing method embodiments.

In another solution, the communication apparatus 1000 is configured to implement an operation performed by the target network apparatus in the foregoing method embodiments.

For example, the processor 1010 is configured to implement a processing-related operation performed by the target network apparatus in the foregoing method embodiments, and the transceiver 1030 is configured to implement sending and receiving-related operations performed by the target network apparatus in the foregoing method embodiments.

An embodiment of this application further provides a communication apparatus 1100. The communication apparatus 1100 may be an access network apparatus or a chip. The communication apparatus 1100 may be configured to perform an operation performed by the access network apparatus in the foregoing method embodiments.

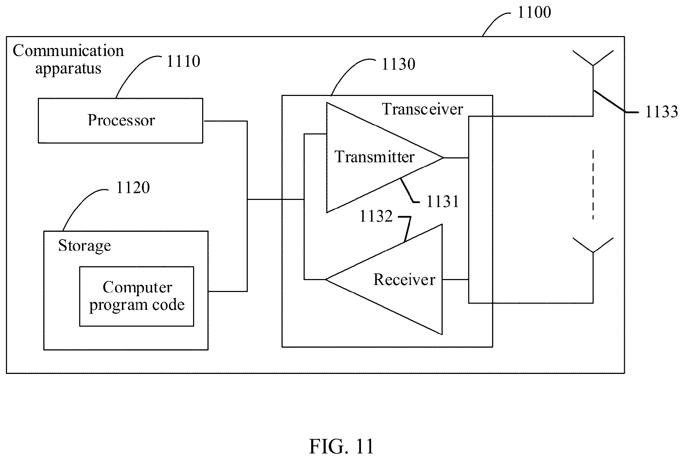

When the communication apparatus 1100 is the access network apparatus, FIG. 11 is a simplified diagram of a structure of the access network apparatus. As shown in FIG. 11, the access network apparatus includes a processor, a storage, and a transceiver. The storage may store computer program code. The transceiver includes a transmitter 1131, a receiver 1132, a radio frequency circuit (not shown in the figure), an antenna 1133, and an input/output apparatus (not shown in the figure). The processor is mainly configured to: process a communication protocol and communication data, and control the access network apparatus to execute a software program, process data of the software program, and the like. The storage is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user. It should be noted that, some types of access network apparatuses may not have the input/output apparatus.

When data needs to be sent, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the access network apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one storage, one processor, and one transceiver. In an actual access network apparatus product, there may be one or more processors and one or more storages. The storage may also be referred to as a storage medium, a storage device, or the like. The storage may be disposed independent of the processor, or may be integrated with the processor. This is not limited in embodiments of this application.

In this embodiment of this application, the antenna and the radio frequency circuit that have sending and receiving functions may be considered as a transceiver unit of the access network apparatus, and the processor having a processing function may be considered as a processing unit of the access network apparatus.

As shown in FIG. 11, the access network apparatus includes a processor 1110, a storage 1120, and a transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component that is in the transceiver 1130 and that is configured to implement a receiving function may be considered as a receiving unit, and a component that is in the transceiver 1130 and that is configured to implement a sending function may be considered as a sending unit. In other words, the transceiver 1130 includes a receiver device and a sender device. The transceiver sometimes may also be referred to as a transceiver machine, a transceiver unit, a transceiver circuit, or the like. The receiver device sometimes may also be referred to as a receiver, a receiving unit, a receiver circuit, or the like. The sender device sometimes may also be referred to as a transmitter, a transmitting unit, a transmitter circuit, or the like.

For example, in an implementation, the processor 1110 is configured to perform a processing action on an access network apparatus side in the embodiment shown in FIG. 2, and the transceiver 1130 is configured to perform sending and receiving actions on the access network apparatus side in FIG. 2. For example, the transceiver 1130 is configured to perform receiving and sending operations in step 201 and step 203 in the embodiment shown in FIG. 2. The processor 1110 is configured to perform processing operations in step 204 and step 205 in the embodiment shown in FIG. 2.

For example, in an implementation, the processor 1110 is configured to perform a processing action on an access network apparatus side in the embodiment shown in FIG. 3. The processor 1110 is configured to perform a processing operation in step 308 in the embodiment shown in FIG. 3.

For example, in an implementation, the processor 1110 is configured to perform a processing action on an access network apparatus side or a target network apparatus side in the embodiment shown in FIG. 4. The processor 1110 is configured to perform a processing operation in step 408 in the embodiment shown in FIG. 4.

For example, in an implementation, the processor 1110 is configured to perform a processing action on an access network apparatus side or a target network apparatus side in the embodiment shown in FIG. 5. The processor 1110 is configured to perform processing operations in step 504 and step 508 in the embodiment shown in FIG. 5.

It should be understood that, FIG. 11 is merely an example rather than a limitation. The access network apparatus including the transceiver unit and the processing unit may not depend on the structure shown in FIG. 11.

When the communication apparatus 1100 is the chip, the chip includes a processor, a storage, and a transceiver. The transceiver may be an input/output circuit or a communication interface. The processor may be a processing unit, a microprocessor, or an integrated circuit integrated on the chip. A sending operation of the access network apparatus in the foregoing method embodiments may be understood as an output of the chip, and a receiving operation of the access network apparatus in the foregoing method embodiments may be understood as an input of the chip.

An embodiment of this application further provides a computer-readable storage medium. The computer-readable storage medium stores computer instructions for implementing the method performed by the access network apparatus in the foregoing method embodiments or the method performed by the source network apparatus or the target network apparatus in the foregoing method embodiments.

For example, when a computer program is executed by a computer, the computer is caused to implement the method performed by the access network apparatus in the foregoing method embodiments or the method performed by the source network apparatus or the target network apparatus in the foregoing method embodiments.

An embodiment of this application further provides a computer program product including instructions. When the instructions are executed by a computer, the computer is caused to implement the method performed by the access network apparatus in the foregoing method embodiments or the method performed by the source network apparatus or the target network apparatus in the foregoing method embodiments.

An embodiment of this application further provides a chip apparatus, including a processor configured to invoke a computer program or computer instructions stored in a storage, to cause the processor to perform the communication method in the embodiments shown in FIG. 2 to FIG. 7.

In a possible implementation, an input of the chip apparatus corresponds to the receiving operation in the embodiments shown in FIG. 2 to FIG. 7, and an output of the chip apparatus corresponds to the sending operation in the embodiments shown in FIG. 2 to FIG. 7.

Optionally, the processor is coupled to the storage through an interface.

Optionally, the chip apparatus further includes the storage, and the storage stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the communication method in the embodiments shown in FIG. 2 to FIG. 7. The storage mentioned in any one of the foregoing descriptions may be a read-only memory (read-only memory, ROM), another type of static storage device that can store static information and instructions, a random access memory (random access memory, RAM), or the like.

It can be clearly understood by a person skilled in the art that, for the purpose of convenient and brief description, for explanations and beneficial effects of related content in any one of the communication apparatuses provided above, refer to the corresponding method embodiments provided above. Details are not described herein again.

In embodiments of this application, the access network apparatus, the target network apparatus, or the source network apparatus may include a hardware layer, an operating system layer running above the hardware layer, and an application layer running above the operating system layer. The hardware layer may include hardware like a central processing unit (central processing unit, CPU), a memory management unit (memory management unit, MMU), and a memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a specific working process of the foregoing system, apparatus, and units, refer to a corresponding process in the foregoing method embodiments. Details are not described herein again.

In several embodiments provided in this application, it should be understood that, the disclosed system, apparatuses, and method may be implemented in other manners. For example, the apparatus embodiments described above are merely examples. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or the units may be implemented in electronic, mechanical, or other forms.

Units described as separate components may or may not be physically separate, and components displayed as units may or may not be physical units, to be specific, may be located in one place, or may be distributed on a plurality of network units. Some or all of the units may be selected based on an actual requirement to achieve the objectives of the solutions in the embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, a part that essentially contributes to the technical solutions of this application or all or some of the technical solutions may be embodied in a form of a software product. The computer software product is stored in a storage medium, and includes several instructions for instructing a computer device (which may be a personal computer, a server, a network device, or the like) to perform all or some of steps of the method in embodiments of this application. The foregoing storage medium includes any medium that can store program code, such as a USB flash drive, a removable hard disk, a read-only memory, a random access memory, a magnetic disk, or an optical disc.

## Claims

1. A communication method, comprising:
sending, by an access network apparatus, a first request to a target network apparatus, wherein the first request is for requesting to set up a first communication interface between the access network apparatus and the target network apparatus;
receiving, by the access network apparatus, a first response from the target network apparatus, wherein the first response indicates that the target network apparatus has configured a context parameter of the first communication interface;
setting up, by the access network apparatus, the first communication interface with the target network apparatus based on the context parameter of the first communication interface; and
switching, by the access network apparatus, a corresponding communication interface from a second communication interface to the first communication interface, wherein the second communication interface is a communication interface between the access network apparatus and a source network apparatus.

2. The method according to claim 1, wherein the first request comprises a context identifier of the second communication interface, and the context identifier of the second communication interface is used by the target network apparatus to obtain a context parameter of the second communication interface from the source network apparatus; and
the first response comprises an updated parameter, and the updated parameter is a parameter that is of the first communication interface and that changes relative to that of the second communication interface.

3. The method according to claim 1, wherein the first request comprises a context identifier of the first communication interface, and the context identifier of the first communication interface is used by the target network apparatus to configure the context parameter of the first communication interface.

4. The method according to claim 3, wherein the context identifier of the first communication interface is notified by the source network apparatus to the access network apparatus.

5. The method according to claim 3, wherein the context identifier of the first communication interface is determined by the access network apparatus from a plurality of to-be-set-up communication interfaces based on an interface setup trigger condition.

6. The method according to claim 2, wherein before sending, by the access network apparatus, the first request to the target network apparatus, the method further comprises:
receiving, by the access network apparatus, the context identifier that is of the second communication interface and that is sent by the source network apparatus.

7. The method according to any one of claims 3 to 5, wherein before sending, by the access network apparatus, the first request to the target network apparatus, the method further comprises:
receiving, by the access network apparatus, context parameters that are of the plurality of to-be-set-up communication interfaces and that are sent by the source network apparatus, wherein the context parameters of the plurality of to-be-set-up communication interfaces comprise the context parameter of the first communication interface.

8. The method according to claim 5, wherein the interface setup trigger condition comprises at least one of the following:
validity duration of each to-be-set-up communication interface, a spatial position of the access network apparatus, an angle of the access network apparatus relative to a network apparatus to which each to-be-set-up communication interface belongs, a priority of each to-be-set-up communication interface, and use of each to-be-set-up communication interface.

9. The method according to any one of claims 1 to 8, wherein the method further comprises:
selecting, by the access network apparatus, the second communication interface for a terminal device from the plurality of communication interfaces, wherein each of the plurality of communication interfaces is a communication interface between the access network apparatus and a different network apparatus, and the second communication interface is a communication interface whose validity period and/or first weight meet/meets a communication requirement in the plurality of communication interfaces.

10. The method according to claim 9, wherein the first weight is obtained based on an initial weight reported by the different network apparatus and a weight change rate.

11. The method according to claim 8 or 9, wherein the second communication interface comprises a plurality of transport network layers TNLs, and the method further comprises:
determining, by the access network apparatus from the plurality of TNLs based on a validity period of each TNL, a target TNL for binding the terminal device.

12. The method according to claim 11, wherein the validity period of the TNL is related to at least one of the spatial position of the access network apparatus, the angle of the access network apparatus relative to the network apparatus to which each to-be-set-up communication interface belongs, and a second weight of the TNL.

13. The method according to claim 11 or 12, wherein the method further comprises:
creating, deleting, or updating, by the access network apparatus, the TNL in the second communication interface based on a TNL management indication.

14. A communication method, comprising:
receiving, by a target network apparatus, a first request from an access network apparatus, wherein the first request is for requesting to set up a first communication interface between the access network apparatus and the target network apparatus;
sending, by the target network apparatus, a first response, wherein the first response indicates that the target network apparatus has configured a context parameter of the first communication interface; and
communicating, by the target network apparatus, with the access network apparatus through the first communication interface.

15. The method according to claim 14, wherein the first request comprises a context identifier of a second communication interface, and the method further comprises:
obtaining, by the target network apparatus, a context parameter of the second communication interface from a source network apparatus based on the context identifier of the second communication interface; and
determining, by the target network apparatus, an updated parameter based on the context parameter of the second communication interface, wherein the updated parameter is a parameter that is of the first communication interface and that changes relative to that of the second communication interface, wherein
correspondingly, the first response comprises the updated parameter.

16. The method according to claim 14, wherein the first request comprises a context identifier of the first communication interface, and the method further comprises:
configuring, by the target network apparatus, the context parameter of the first communication interface based on the context identifier of the first communication interface.

17. The method according to claim 16, wherein before receiving, by the target network apparatus, the first request from the access network apparatus, the method further comprises:
sending, by the target network apparatus, the identifier of the first communication interface and the context parameter of the first communication interface to a source network apparatus.

18. A communication method, comprising:
receiving, by a source network apparatus, a second request from an access network apparatus, wherein the second request is for requesting to set up a second communication interface between the access network apparatus and the source network apparatus; and
sending, by the source network apparatus, a second response to the access network apparatus, wherein the second response comprises interface switching information, the interface switching information is used by the access network apparatus to switch a corresponding communication interface from the second communication interface to a first communication interface, and the first communication interface is a communication interface between the access network apparatus and a target network apparatus.

19. The method according to claim 18, wherein the interface switching information comprises a context identifier of the second communication interface, and when the access network apparatus requests to set up the first communication interface with the target network apparatus, the context identifier of the second communication interface is used by the target network apparatus to obtain a context parameter of the second communication interface from the source network apparatus.

20. The method according to claim 18, wherein the interface switching information comprises context parameters of a plurality of to-be-set-up communication interfaces, the context parameters of all the to-be-set-up communication interfaces are from different network apparatuses, and the different network apparatuses comprise the target network apparatus.

21. The method according to claim 20, wherein after sending, by the source network apparatus, the second response to the access network apparatus, the method further comprises:
sending, by the source network apparatus, a configuration update request to the access network apparatus, wherein the configuration update request comprises a context identifier of the first communication interface, and the context identifier of the first communication interface is used by the access network apparatus to indicate the target network apparatus to configure a context parameter of the first communication interface.

22. A communication apparatus, wherein the communication apparatus comprises a transceiver module and a processing module, the transceiver module is configured to perform receiving and sending operations in the method according to any one of claims 1 to 13, and the processing module is configured to perform a processing operation in the method according to any one of claims 1 to 13.

23. A communication apparatus, wherein the communication apparatus comprises a transceiver module and a processing module, the transceiver module is configured to perform receiving and sending operations in the method according to any one of claims 14 to 17, and the processing module is configured to perform a processing operation in the method according to any one of claims 14 to 17.

24. A communication apparatus, wherein the communication apparatus comprises a transceiver module and a processing module, the transceiver module is configured to perform receiving and sending operations in the method according to any one of claims 18 to 21, and the processing module is configured to perform a processing operation in the method according to any one of claims 18 to 21.

25. A communication apparatus, wherein the communication apparatus comprises:
a storage, configured to store computer instructions; and
a processor, configured to execute a computer program or the computer instructions stored in the storage, to cause the communication apparatus to perform the method according to any one of claims 1 to 13, claims 14 to 17, and claims 18 to 21.

26. A communication apparatus, wherein the communication apparatus comprises a processor, and the processor is configured to perform the method according to any one of claims 1 to 13, claims 14 to 17, and claims 18 to 21.

27. A computer-readable storage medium, wherein the computer-readable storage medium stores a computer program, and when the computer program is executed by a communication apparatus, the communication apparatus is caused to perform the method according to any one of claims 1 to 13, claims 14 to 17, and claims 18 to 21.

28. A computer program product comprising program instructions, wherein when the program instructions are run on a computer, the computer is caused to perform the method according to any one of claims 1 to 13, claims 14 to 17, and claims 18 to 21.

29. A communication system, comprising an access network apparatus, a source network apparatus, and a target network apparatus, wherein the access network apparatus is configured to perform the method according to any one of claims 1 to 13, the target network apparatus is configured to perform the method according to any one of claims 14 to 17, and the source network apparatus is configured to perform the method according to any one of claims 18 to 21.
